Europäisches Patentamt

European Patent Office

Office européen des brevets

(19)

(11) **EP 0 640 844 B1**

(12) **FASCICULE DE BREVET EUROPEEN**

(45) Date de publication et mention
de la délivrance du brevet:
**29.09.1999   Bulletin 1999/39**

(51) Int Cl.[6]: **G01S 13/95**, H01Q 1/28

(21) Numéro de dépôt: **94401873.8**

(22) Date de dépôt: **18.08.1994**

(54) **Antenne bi-faisceaux à balayage électronique**

Doppelstrahlantenne mit elektronischer Strahlablenkung

Electronically scanning dual beam antenna

(84) Etats contractants désignés:
**DE FR GB IT**

(30) Priorité: **23.08.1993   FR 9310184**

(43) Date de publication de la demande:
**01.03.1995   Bulletin 1995/09**

(73) Titulaire: **ALCATEL**
**75008 Paris (FR)**

(72) Inventeur: **Caille, Gérard**
**F-31170 Tournefeuille (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
EP-A- 0 466 579          EP-A- 0 496 329
EP-A- 0 534 862          FR-A- 2 585 514
GB-A- 2 262 387          US-A- 4 823 143

- L' ONDE ELECTRIQUE, vol.72, no.6, Novembre 1992, PARIS, FR pages 29 - 38 J. RICHARD ET AL 'Observation de la terre depuis l'espace à l'aide d'instruments hyperfrèquences actifs'

## Description

Le domaine de l'invention est celui des antennes actives à balayage électronique, et plus particulièrement des antennes destinées à être embarquées sur une plateforme mobile. L'antenne selon l'invention sera avantageusement utilisée pour des missions de radar spatial à partir d'un satellite artificiel en orbite terrestre. Elle peut aussi trouver application à bord des aéronefs ou d'autres engins, qui évoluent à proximité de la surface de la terre ou de tout autre corps céleste (planète, astéroïde, comète, nuages interstellaires, .. etc.).

Il est connu de confier à des satellites circulant en orbite basse des missions de télédétection par radar hyperfréquence. Le satellite en orbite basse se déplace par rapport à un point fixe sur la surface de la terre, à l'opposé d'un satellite géostationnaire. Ce déplacement permet au satellite d'observation de survoler la terre, selon une direction déterminée par son orbite. Les mesures radar effectuées à des moments successifs, tout au long du trajet du satellite, permettent de dresser une cartographie des paramètres mesurés, en fonction de la position du satellite ou autre engin servant de plateforme pour le radar.

Il est connu d'utiliser un radar spatial pour mesurer le taux de précipitations ou d'autre composés atmosphériques. Une onde radar émise avec une polarisation bien définie, subit une dépolarisation en transmission, mais aussi une "rétrodiffusion" ; la mesure du pourcentage de puissance réfléchie détectée par le radar, permet de remonter au taux de précipitations dans la région sondée par le radar. Afin de dresser une cartographie de telles mesures, avec une résolution spatiale adéquate, il est souhaitable que le faisceau émis soit extrêmement fin, par exemple d'une divergence angulaire $\beta$ de l'ordre de 0,18° à 0,4°, pour ne sonder qu'un endroit relativement précis avec un train d'impulsions du radar. D'autre part, pour pouvoir couvrir le globe terrestre dans un délai raisonnable, compatible avec l'échelle de temps de l'évolution météorologique, par exemple, il est souhaitable que le faisceau soit orientable sur un angle transversal relativement important, (par rapport au plan de l'orbite du satellite), de l'ordre de ±10° à ± 20° .

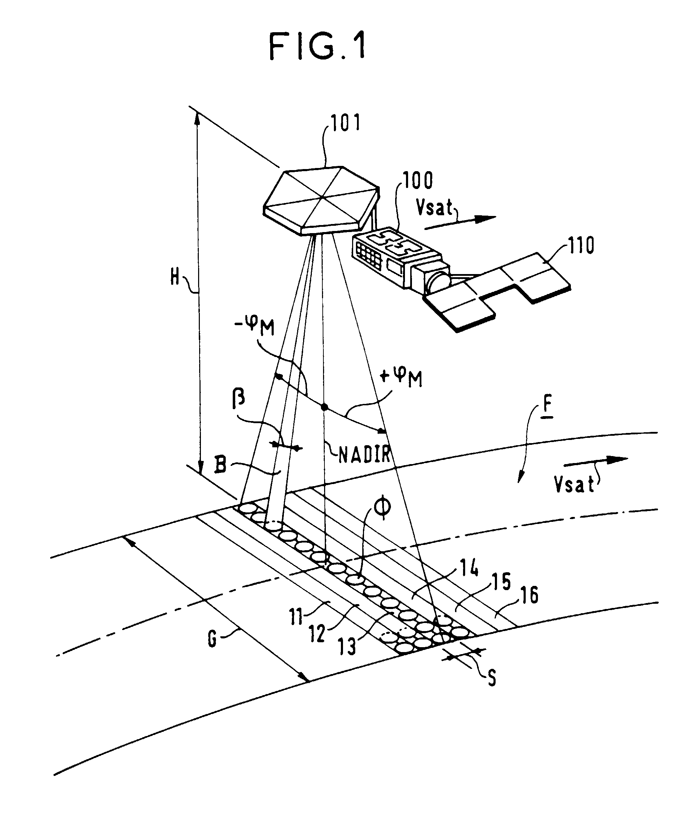

Un satellite de télédétection radar, connu de l'art antérieur, est montré schématiquement sur la figure 1.

Sur cette figure 1, un satellite 100 survole la terre à une hauteur H de l'ordre de 400 à 500 km, avec une vitesse $\overline{V}_{sat}$ qui dépend des paramètres géométriques de l'orbite. Le satellite est muni des équipements nécessaires à sa mission, tels le panneau solaire 110 et l'antenne radar 101. Dans sa configuration la plus simple, un satellite de télédétection radar illumine, dans un plan d'illumination dit "transverse" contenant le nadir et perpendiculaire à la vitesse $\overline{V}_{sat}$, une fauchée F au sol lors de son passage, d'une largeur G. Cette fauchée F est illuminée par des impulsions successives d'ondes hyperfréquence, dont les réflexions constituent le signal radar qui sera reçu par la même antenne 101 fonctionnant en réception, et interprété pour en extraire les données atmosphériques voulues.

Pour illuminer la fauchée F, un pinceau fin B de rayonnement est balayée dans le plan transverse utilisant la technique de balayage électronique, pour illuminer une bande approximativement rectangulaire au sol, de dimensions G en largeur et S en longueur (selon la direction de la vitesse $\overline{V}_{sat}$). Le pinceau B, d'une divergence angulaire $\beta$ (ce qui donne un diamètre $\phi$ au sol), est rayonnée selon un angle $\varphi$ du nadir, l'angle $\varphi$ prenant une valeur différente à chaque impulsion, dans une fourchette de valeurs dont la largeur maximale de variation $\pm\varphi_M$ est typiquement de l'ordre de ±10° à ± 20° . Lors du déplacement du satellite, des bandes successives (11,12,13,14,15,16,...) sont ainsi illuminées, pour couvrir finalement toute la fauchée F.

Des valeurs typiques des différents paramètres, pour les missions de télédétection déjà en vol, sont par exemple:

| H (km) | G (km) | S (km) | $\phi$ (km) | $\pm\varphi_M$ |
|--------|--------|--------|-------------|-----------------|
| 500 | 100 | 3 | 1,6 | ±5,7° |
| 430 | 200 | 3 | 2,8 | ± 13° |

Pour améliorer la restitution de taux de précipitations, il est connu que deux mesures successives d'un même endroit permettent de réduire des effets aléatoires de mesure, dus par exemple à des perturbations atmosphériques telles que des gradients ou des variations de la densité ou de la température de l'air sur le trajet de l'onde radar. Aussi, il a été envisagé d'embarquer deux équipements de mesures radar sur le satellite, pour pouvoir effectuer deux mesures sur une même aire géographique, ces deux mesures étant séparées par un court délai. De plus, viser la même zone suivant deux angles d'incidence différent (+$\alpha$, puis -$\alpha$) permet de restituer avec une plus grande précision le taux de précipitations. Une telle installation est connue de l'homme de l'art sous le nom de "stéréoradar", par analogie avec la vision stéréo binoculaire.

Ceci peut être obtenu avec deux antennes identiques, dont l'une vise légèrement devant le nadir, par un angle +$\alpha$, et dont l'autre vise légèrement derrière le nadir, par un angle -$\alpha$. Une valeur typique de l'angle $\alpha$ serait de l'ordre de 15° à 20°. Deux bandes au sol sont ainsi illuminées par deux faisceaux, $B_F$ et $B_B$ respectivement, ces deux bandes étant séparées par une distance $D = 2 \cdot H \cdot tg\alpha$, où H est la hauteur instantanée du satellite depuis le sol. Ainsi, un endroit illuminé une première fois par le faisceau avant $B_F$ le sera une deuxième fois par le faisceau arrière $B_B$, après un délai $t = D/V_{sat}$.

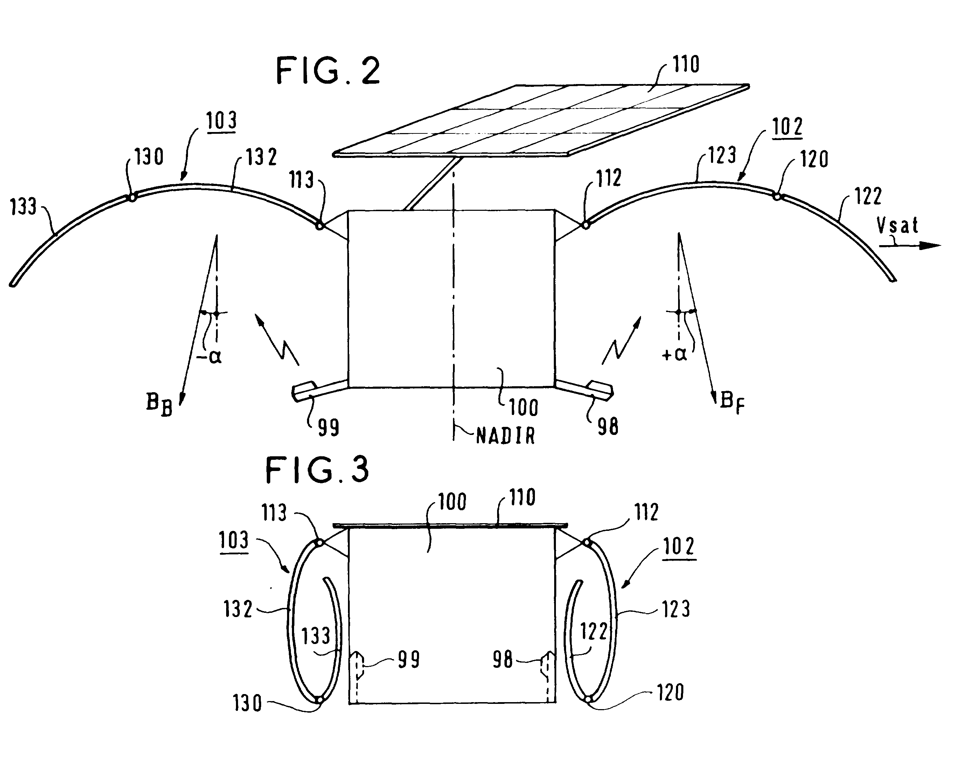

Un satellite comportant une telle charge utile et connu de l'art antérieur est montré très schématiquement et de profil sur la figure 2.

Comme sur la figure précédente, le satellite de télédétection 100 comporte son panneau solaire 110 et se déplace selon le vecteur $\overline{V}_{sat}$. La charge utile de ce satellite stéréoradar comprend deux antennes radar, chacune comprenant un réflecteur (102,103) illuminé par un réseau de sources (98,99) permettant le balayage électronique dans le plan transversal. La géométrie relative des sources et des réflecteurs est conçue pour émettre un faisceau avant $B_F$ incliné d'un angle $+\alpha$ par rapport au Nadir, dans le sens de $\overline{V}_{sat}$, et un faisceau arrière $B_B$ incliné d'un angle $-\alpha$ par rapport au Nadir. Les deux faisceaux peuvent être émis soit simultanément, soit en alternance par commutation. Entre les impulsions émises, l'équipement fonctionne en réception pour recevoir les ondes radar réfléchies, de manière classique.

Plusieurs problèmes se posent avec l'installation classique d'un satellite stéréoradar que l'on vient de décrire. D'une part, un satellite de télédétection peut avoir d'autres missions et d'autres équipements embarqués, ce qui pose tout simplement un problème de place à bord du satellite : pour remplir la mission stéréoradar dans sa configuration classique, il faut que la face avant et la face arrière du satellite soient disponibles pour l'implantation des réflecteurs (102,103). Or, ce n'est pas toujours le cas.

D'autre part, la superposition successive des empreintes des deux faisceaux dépend de la précision de la position et de l'orientation des deux réflecteurs, ainsi que de leur position et de leur orientation relatives. Or, la précision de ces positionnements est compromise par la complexité des antennes, et en particulier par les mécanismes de leur déploiement.

La figure 3 montre schématiquement le même satellite de télédétection stéréoradar de la figure 2, mais en sa configuration de lancement. On voit que pour le lancement, les réflecteurs 102,103 doivent être repliés pour être insérés avec le corps 100 du satellite, sous la coiffe du lanceur Ariane, ou dans la soute de la navette américaine par exemple. Dans le cas le plus simple, les deux réflecteurs 102,103 sont articulés sur le corps 100 du satellite au niveau des charnières 112, 113, tandis que chaque réflecteur (102,103) sera constitué par une pluralité de segments (122,123; 132,133) qui sont eux aussi articulés autour de leurs charnières respectives (120,130).

Le déploiement sur orbite de telles structures n'est pas sans risques, et nombreux sont les satellites qui sont handicapés dans leurs missions par un déploiement inefficace des organes vitaux tels les panneaux solaires, des antennes, etc. Mais même dans le cas d'un déploiement réussi, la position relative de différentes parties articulées entre elles, ne peut être ni prévue, ni estimée, ni commandée qu'avec une précision relative qui est d'autant moins bonne que le nombre de composants articulés est élevé. D'autre part, la position relative de ces éléments peut varier dans le temps, par exemple à cause de dilatations thermiques différentielles induites par l'éclairage solaire lors du déplacement de l'engin.

Finalement, la masse et l'encombrement d'une telle solution de stéréoradar classique sont doubles par rapport à l'équipement monofaisceau de la figure 1.

L'invention à pour but de remédier à ces inconvénients de l'art antérieur, et propose à cet effet une antenne bi faisceaux $(B_F,B_B)$ à balayage électronique pour radar stéréo, qui ne comporte qu'une seule structure de réflecteurs. Selon une caractéristique préférentielle, le balayage électronique est dans un plan transversal, les deux faisceaux $(B_F, B_B)$ sont fins (divergence angulaire $\beta$ de l'ordre de 0,18° à 0,4°, pour diamètre au sol $\phi$), et le domaine de balayage dans un plan transversal, ainsi que l'écartement $(2\alpha)$ dans un plan orthogonal dit longitudinal, sont de l'ordre de 50 à 200 fois la divergence angulaire $(\beta)$ de chaque faisceau.

Selon une caractéristique importante de l'invention, cette structure de réflecteurs comprend deux coques de réflecteurs, dont un au moins est un réflecteur à grille, ces deux réflecteurs étant mutuellement disposés pour former un biréflecteur à grille. Selon une caractéristique préférentielle, les deux coques sont reliées par des éléments structuraux qui sont des espaceurs-raidisseurs. Selon une autre caractéristique préférentielle, les deux réflecteurs sont d'une forme cylindro-parabolique. Selon une réalisation particulière, la section de chaque réflecteur cylindro-parabolique dans un plan transverse à ses génératrices rectilignes est un tronçon de parabole, et ces deux tronçons de parabole sont "inversés", c'est-à-dire que le sommet de chaque parabole est à l'une des extrémités du tronçon de parabole, le sommet de parabole du premier réflecteur étant à une première extrémité de la structure, et le sommet de parabole du deuxième réflecteur étant à une deuxième extrémité de la structure du bi-réflecteur à grille.

Selon une caractéristique importante, un premier réflecteur à grille réfléchit une première polarisation tout en laissant passer une deuxième polarisation orthogonale à la première polarisation, sensiblement sans absorption ni réflexion. Selon une réalisation préférentielle, les réflecteurs sont illuminés par une pluralité de réseaux linéaires de sources rayonnantes dont les phases d'émission peuvent être commandées de manière à effectuer un balayage électronique dans un plan dit transversal. Selon une variante, les réseaux de sources sont disposés en "offset" par rapport aux réflecteurs respectifs, c'est-à-dire en dehors du champ rayonné réfléchi par ces réflecteurs.

Selon une caractéristique, l'antenne fonctionne comme un radar en impulsions, alternativement en émission et en réception. Selon une variante, l'antenne selon l'invention fonctionne en radiomètre, c'est-à-dire en réception uniquement.

L'antenne bi-faisceaux selon l'invention possède une masse et un encombrement réduits par rapport à la solution classique décrite ci-dessus. Son implantation sur un satellite multi-missions, ainsi que son déploiement sur orbite en sont très largement simplifiés. Finalement, la précision du positionnement relatif des deux réflecteurs est sensiblement améliorée, ayant pour résultat une meilleure précision et une meilleure fiabilité des mesures effectuées par l'équipement.

De toute façon, l'invention sera bien comprise, et ses avantages et caractéristiques ressortiront mieux, lors de la description suivante de quelques exemples non-limitatifs de réalisation, en référence aux dessins schématiques annexés dans lesquels :

- la figure 1, déjà décrite, est une vue synthétique très simplifiée d'un système de télédétection radar monofaisceau par satellite avec une antenne à balayage électronique selon l'art antérieur ;
- la figure 2, déjà décrite, est un schéma synoptique d'un satellite de télédétection stéréoradar par satellite, toujours selon l'art antérieur ;
- la figure 3, déjà décrite, est un schéma synoptique du satellite de la figure 2, en configuration de lancement ;
- la figure 4 est une vue schématique d'un système de télédétection stéréoradar par satellite avec une antenne bi-faisceaux à balayage électronique selon l'invention ;
- la figure 5 est une vue schématique en perspective d'une antenne monofaisceau "offset" à réflecteur cylindro-parabolique et à balayage électronique selon l'art antérieur, telle qu'utilisée dans un système selon l'une des figures 1 à 3 ;
- la figure 6 est une vue schématique en perspective d'une antenne à bi-réflecteur cylindro-parabolique et à balayage électronique selon l'invention, telle qu'utilisée dans un système selon la figure 4 ;
- la figure 7 est une vue schématique et en coupe de l'antenne de la figure 6 ;
- la figure 8 montre en agrandissement un détail de la figure 7.

Sur les différentes figures, les mêmes repères se réfèrent aux mêmes éléments. L'échelle du dessin n'est pas toujours rigoureusement respectée pour des raisons de clarté. Les exemples présentés concernent des antennes embarquées pour satellites d'observation de la terre, toutefois il est entendu que l'invention concerne également le même genre d'antennes pour d'autres plateformes mobiles, tels des aéronefs ou encore d'autres engins spatiaux tels des sondes planétaires ou interplanétaires.

Tous les exemples qui seront discutés en détail utilisent une antenne d'émission pour illustrer les propos, cependant, est bien connu de l'homme de l'art le théorème de réciprocité, selon lequel une antenne fonctionne de façon identique en émission ou en réception, à condition d'inverser le vecteur temporel.

Les descriptions et remarques qui sont faites concernant des antennes d'émission sont aussi strictement transposables, à condition d'inverser le flux de puissance dans l'appareil, à des antennes de réception.

Dans le cas d'une antenne radar, le même dispositif physique est généralement appelé à remplir les deux rôles d'émission et de réception ; cependant, il faut prévoir deux chaînes d'amplification, l'une pour fournir l'amplification de puissance nécessaire pour l'émission de l'onde hyperfréquence, et l'autre pour l'amplification faible bruit des signaux radar relativement faibles reçus après réflexion de l'onde par la cible radar. Le traitement des deux voies, de réception et d'émission, est parfaitement symétrique à l'exception de ce détail, et pour la clarté de la description qui suit, il suffit de décrire seule la voie d'émission, sachant que l'inversion en voie de réception peut en être déduite sans ambiguïté par l'homme de métier.

Dans le cas d'une mission de radiométrie, seule une antenne de réception avec sa chaîne d'amplification faible bruit est nécessaire. La structure de l'antenne elle-même reste identique à celle d'une antenne radar, à ceci près qu'il n'y a point besoin d'une électronique d'amplification de puissance hyperfréquence pour alimenter l'émission d'une onde hyperfréquence.

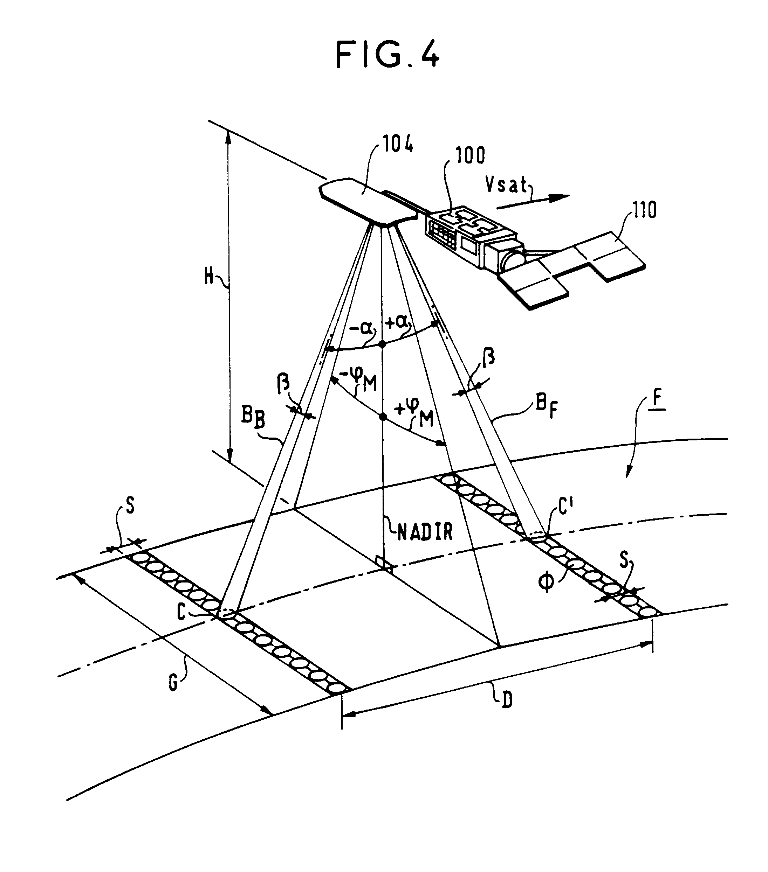

La figure 4 montre une vue schématique d'un système de télédétection stéréoradar par satellite avec une antenne bi-faisceaux à balayage électronique selon l'invention. Comme dans la figure 1, un satellite de télédétection 100 survole la terre à une hauteur H selon une direction et une vitesse $\overline{V}_{sat}$ qui dépend des paramètres géométriques de l'orbite. Le satellite est muni des équipements nécessaires à sa mission, tels le panneau solaire 110 et l'antenne radar 104. Dans sa configuration stéréoradar, un satellite de télédétection radar illumine, soit simultanément, soit en alternance par commutation, deux bandes au sol (C,C') ayant chacune une largeur G (dans un sens perpendiculaire à la vitesse $\overline{V}_{sat}$). La fauchée F au sol est ainsi illuminé deux fois successives lors du passage du satellite, une première fois par le faisceau avant $B_F$, et une deuxième fois par le faisceau arrière $B_B$.

Comme dans l'art antérieur, cette fauchée F est illuminée par des impulsions successives d'ondes hyperfréquence, dont les réflexions constituent le signal radar qui sera reçu par la même antenne 104 fonctionnant en réception, et interprèté pour en extraire les données atmosphériques voulues.

Pour illuminer la fauchée F, le stéréoradar utilise donc deux pinceaux fins $(B_F, B_B)$ de rayonnement de divergence angulaire $\beta$ faible, chaque pinceau étant balayé dans un plan transverse respectif incliné d'un angle $\pm\alpha$ par rapport au plan transversal contenant le nadir, pour illuminer deux bandes approximativement rectangulaires au sol, chacune de dimensions G en largeur et S en longueur (selon la direction de la vitesse $\overline{V}_{sat}$). L'orientation d'un pinceau $(B_F, B_B)$, de diamètre $\phi$ au sol (approximativement), peut être spécifiée par deux angles : $\pm\alpha$ par rapport au nadir dans un plan dit longitudinal contenant le nadir et le vecteur $\overline{V}_{sat}$ ; et un angle $\varphi$ entre le faisceau et le plan longitudinal. La valeur de l'angle $\alpha$ est de l'ordre de 15 à 20°, fixée à la conception du satellite, tandis que l'angle $\varphi$ prend une valeur différente à chaque impulsion, dans une fourchette de valeurs dont la largeur maximale de variation $\pm\varphi_M$ est typiquement de l'ordre de +10° à + 20° . La divergence angulaire des faisceaux est typiquement de l'ordre de 0,18 à 0,4°, (largeur à -3dB) comme dans l'art antérieur. Il en résulte que, dans une réalisation préférentielle selon l'invention, le domaine de balayage $(\pm\varphi_M)$ de chaque faisceau dans un plan transversal, ainsi que l'écartement $(2\alpha)$ entre les deux faisceaux dans un plan orthogonal dit longitudinal, sont de l'ordre de 50 à 200 fois la divergence angulaire $(\beta)$ de chaque faisceau.

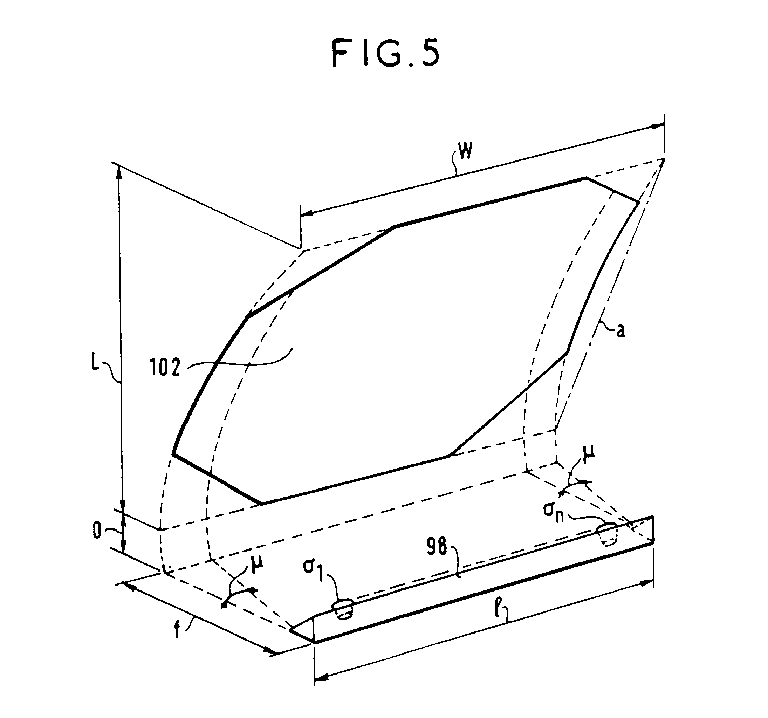

La figure 5 montre schématiquement et en perspective une antenne monofaisceau "offset" à balayage électronique et à réflecteur cylindro-parabolique selon l'art antérieur, conforme à l'une des antennes radar montrées sur les figures 2 et 3. Les génératrices rectilignes du réflecteur cylindro-parabolique 102 sont disposées perpendiculaires au vecteur $\overline{V}_{sat}$, et parallèles au plan transverse de balayage électronique. La section transverse du réflecteur est un arc de parabole ayant une corde $\underline{a}$ qui sous-tend l'arc, cette corde $\underline{a}$ étant l'hypoténuse d'un triangle rectangle ayant pour les deux autres côtés, les dimensions L en longueur (selon la direction $\overline{V}_{sat}$), et $\underline{f}$ en profondeur. Le réflecteur a aussi une largeur (selon la direction de balayage électronique) de W.

Les dimensions L, f du réflecteur sont choisies en fonction du gain requis de l'antenne, ainsi que des paramètres du faisceau tels la divergence angulaire très fine $\beta$ . La dimension W est choisie en fonction de la longueur $\underline{l}$ d'un réseau linéaire 98 de sources rayonnantes $(\sigma_1, \sigma_2, ... \sigma_n)$ et l'angle maximale $\mu$ de balayage électronique dans le plan transverse ($\pm\mu$ de chaque côté d'un plan contenant le nadir et $\overline{V}_{sat}$). Le balayage électronique est obtenu de façon classique en jouant sur les phases des sources $(\sigma_1, \sigma_2, ... \sigma_n)$.

Pour obtenir la faible divergence $\beta$ souhaitée, le réseau linéaire 98 doit être disposé sensiblement selon la ligne focale du réflecteur cylindro-parabolique. D'autre part, pour éviter que le réseau 98 de sources ne se trouve sur le trajet du faisceau réfléchi par le réflecteur 102, le réseau 98 est disposé légèrement décalé par rapport au réflecteur, par une distance O appelé "offset" dans l'art.

Les dimensions typiques qui correspondraient à la mission du satellite montré sur les figures 2 et 3 sont les suivantes :

| L (m) | O (m) | f (m) | $\mu$ (°) | l(m) | W (m) | a (m) |
|-------|-------|-------|-----------|------|-------|-------|
| 4.78  | 0.2   | 2.39  | $\pm 15°$ | 4.78 | 6.06  | 5.39  |

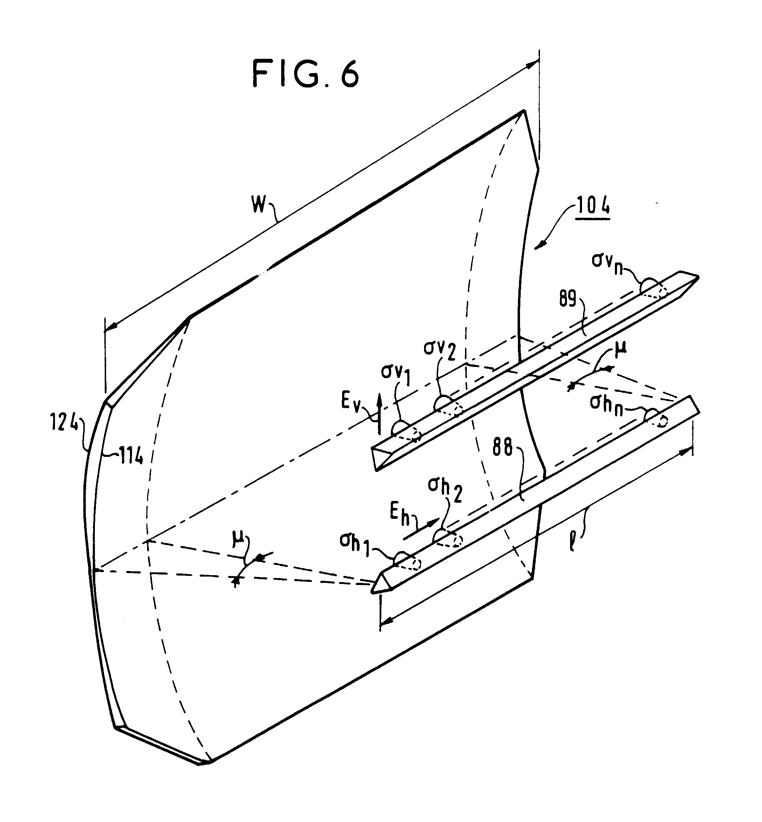

La figure 6 est une vue schématique et en perspective d'une antenne à bi-réflecteur cylindro-parabolique et à balayage électronique selon l'invention, telle qu'utilisée dans un système selon la figure 4. La géométrie de cette antenne est dérivée de celle de l'antenne de la figure 5 par un dédoublement des organes de cette dernière. Ainsi, on voit deux réseaux linéaires (88,89) de sources rayonnantes élémentaires, et deux réflecteurs cylindro-paraboliques (114,124). Ce dispositif est conçu pour rayonner deux faisceaux fins, écartés de $\pm\alpha$ du nadir.

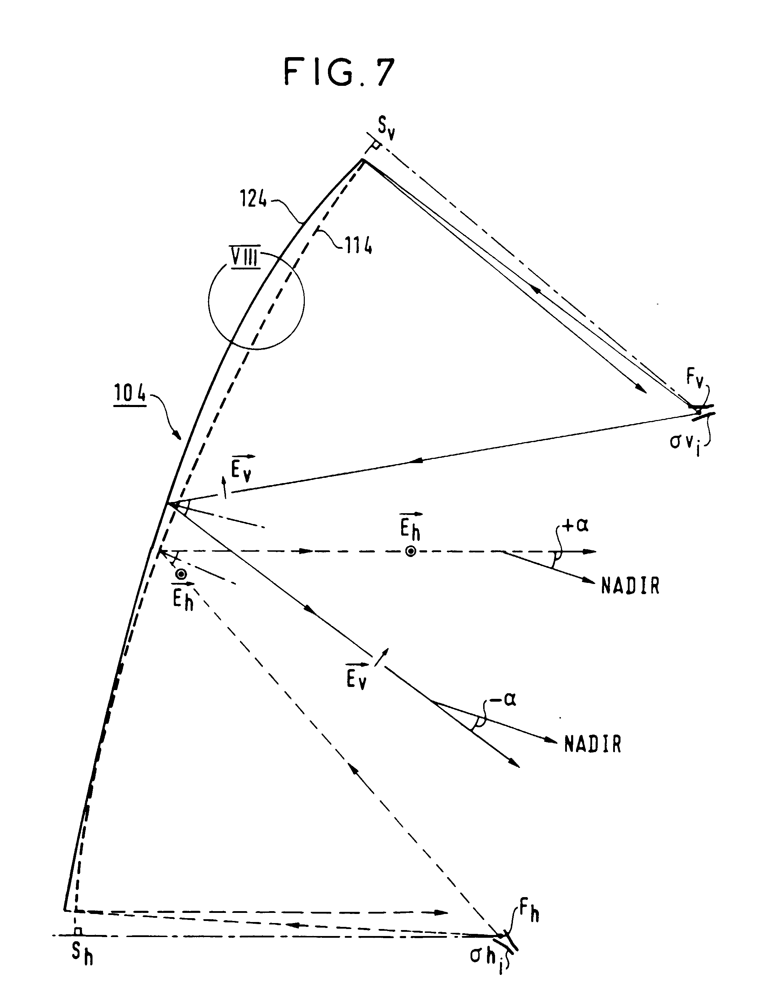

Les dimensions sont similaires à celles de l'antenne de la figure 5, et pour la clarté de la figure 6, elles ne sont pas toutes portées ici. On voit par exemple la même largeur W du réflecteur complexe 104, pour la même longueur $\underline{l}$ des réseaux linéaires 88,89 et le même angle maximal $\mu$ de balayage électronique dans le plan transverse ($\pm\mu$ de chaque côté d'un plan contenant le nadir et $\overline{V}_{sat}$). La géométrie de l'offset a été modifiée par rapport à la figure 5, mais se voit plus clairement sur la figure suivante (figure 7).

Pour le bon fonctionnement de l'antenne bi-faisceaux de la figure 6, chaque faisceau doit être rayonné et réfléchi indépendamment de l'autre. Pour se faire, l'antenne selon l'invention utilise des polarisations orthogonales pour les deux faisceaux. Par exemple, un premier réseau linéaire 89 sera constitué d'une pluralité de sources élémentaires $(\sigma_{v1}, \sigma_{v2}, ... \sigma_{vn})$ qui émettent un rayonnement $\overline{E}_v$ ayant une polarisation verticale ; tandis que le second réseau linéaire 88 sera constitué d'une pluralité de sources élémentaires $(\sigma_{h1}, \sigma_{h2}, ... \sigma_{hn})$ qui émettent un rayonnement $\overline{E}_h$ ayant une polarisation horizontale (parallèle aux génératrices rectilignes du réflecteur 104). Bien sur, on aurait pu prendre d'autres polarisations orthogonales que celles choisies pour cet exemple.

Chaque réseau linéaire doit être associé, dans une disposition géométrique précise, avec son propre réflecteur. Aussi, le rayonnement $\overline{E}_h$ de polarisation horizontale sera réfléchi par le réflecteur de polarisation horizontale 114, et le rayonnement $\overline{E}_v$ de polarisation verticale sera réfléchi par le réflecteur de polarisation verticale 124.

Parce que dans cet exemple le réflecteur de polarisation horizontale 114 est devant le réflecteur de polarisation verticale 124, le réflecteur 114 doit être transparent au rayonnement $\overline{E}_v$ de polarisation verticale. Ceci peut être obtenu en utilisant un réflecteur à grille pour le réflecteur avant 114, dont la construction et les propriétés sont connues de l'homme de l'art: une grille de fils parallèles réfléchit la polarisation qui lui est parallèle, mais laisse passer la polarisation orthogonale, qui sera réfléchie par le réflecteur arrière 124.

Ce réflecteur à grille 114 peut être réalisé, selon les techniques connues de l'homme de l'art, par gravure de pistes conductrices parallèles sur une coque ou un support diélectrique ayant la forme cylindro-parabolique voulue. Le diélectrique sera choisi en fonction de ses propriétés mécaniques et électriques, notamment sa transparence aux radiations électromagnétiques hyperfréquence. Des antennes bi-réflecteur à grille sont connues pour d'autres applications, et les différentes techniques de leur réalisation sont également connues.

Le réflecteur 124, étant disposé derrière le réflecteur à grille 114 qui est sélectif en polarisation, ne reçoit la polarisation verticale $\bar{E}_v$, seule capable de traverser la grille horizontale du réflecteur 114. Le réflecteur arrière 124 n'a donc pas besoin d'être sélectif en polarisation. Sa réalisation est la plus simple : une couche conductrice ayant le profil voulu. Pour obtenir la forme cylindro-parabolique requise, tout en minimisant le poids de sa construction, ce réflecteur pourra aussi être réalisé par dépôt d'une couche métallique sur une coque ou un support diélectrique ayant la forme voulue.

Vu les dimensions de l'antenne, similaires à celles mentionnées sur le tableau précédent, et vu les problèmes de stabilité dimensionnelle mentionnés en préambule, il est souhaitable que la structure du réflecteur complexe 104 soit aussi rigide que possible, pour conserver les relations géométriques prévues par le concepteur d'antenne. Dans une réalisation avantageuse de l'invention, l'espace entre les deux coques diélectriques 114,124 est mis à profit pour renforcer la rigidité de l'ensemble.

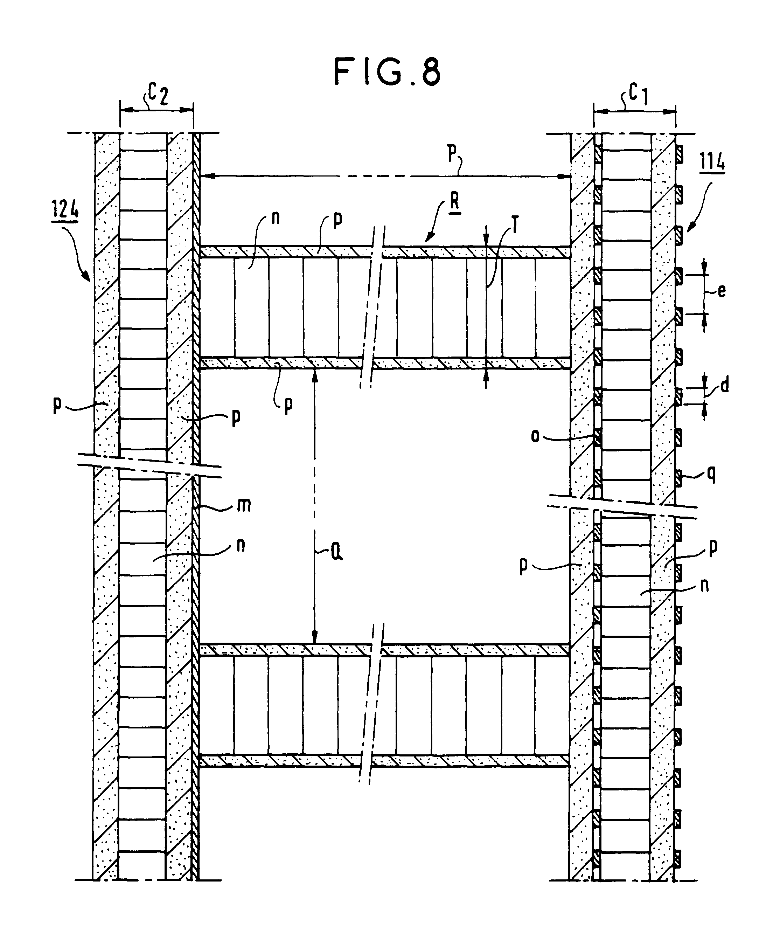

Ceci peut être effectué à l'aide d'espaceurs/raidisseurs (montrées sur la figure 8), qui sont des cales profilées qui peuvent être insérées et fixées entre les deux coques, à l'aide d'une colle appropriée ou par tout autre moyen de fixation. Dans une autre variante de réalisation, l'espace entre les deux coques peut être rempli partiellement ou totalement par un "nid d'abeille" dont l'épaisseur est travaillé pour épouser les deux coques sur toute leur surface, formant un sandwich ou le nid d'abeille est entouré par les deux coques diélectriques. Ce genre de construction est classique pour obtenir des éléments de structure ayant un fort rapport rigidité/poids.

Les sources élémentaires ($\sigma_{v1}$, $\sigma_{v2}$, ... $\sigma_{vn}$ ; $\sigma_{h1}$, $\sigma_{h2}$, ... $\sigma_{hn}$) sont des sources couramment utilisées dans des réseaux, telles des cornets, ou encore des éléments gravés microruban, avec ou sans résonateurs. Le choix des sources élémentaires est un choix du concepteur d'antenne à effectuer parmi les sources qu'il connaît.

La figure 7 est une vue schématique et en coupe dans le plan longitudinal (contenant le Nadir et le vecteur $\bar{V}_{sat}$) de l'antenne de la figure 6, c'est-à-dire d'une antenne à bi-réflecteur cylindro-parabolique et à balayage électronique selon l'invention. Sur cette figure apparaît clairement les dispositions géométriques des différents éléments portés sur la figure précédente. La coupe est effectuée au niveau d'une paire de sources ($\sigma_{vi}$, $\sigma_{hi}$) qui sont disposées respectivement aux foyers ($F_v$, $F_h$) des réflecteurs cylindro-parabolique correspondants (124 pour la polarisation verticale ; 114 pour l'horizontale).

La géométrie "offset" de chaque paire source/réflecteur est apparente sur cette figure. Dans cette géométrie avantageuse, la section longitudinale des deux réflecteurs 124, 114 sont des tronçons de parabole, dont les sommets ($S_v$, $S_h$) sont légèrement en dehors des tronçons. Ces paraboles sont disposées de façon "inversée", c'est-à-dire que le sommet de chaque parabole est à l'une des extrémités du tronçon de parabole, le sommet $S_h$ de parabole du premier réflecteur 114 étant à une première extrémité (en bas) de la structure 104, et le sommet $S_v$ de parabole du deuxième réflecteur 124 étant à une deuxième extrémité (en haut) de la structure du bi-réflecteur à grille. Du fait que les sommets des paraboles sont au-delà de la partie réfléchissante de chaque réflecteur, les sources ($\sigma_{vi}$, $\sigma_{hi}$) se trouvent en dehors de leurs faisceaux respectifs après réflexion, tel que montré sur la figure aux extrémités de chaque réflecteur.

Le rayonnement émis par chaque source ($\sigma_{vi}$, $\sigma_{hi}$) est divergent, mais puisque chaque source se trouve au foyer de son réflecteur respectif, le rayonnement forme un faisceau de rayons sensiblement parallèles après réflexion, ce qui permet d'obtenir la faible divergence β du faisceau exigé par la mission de télédétection par radar spatial évoquée en préambule.

La figure montre qu'avec la disposition inversée des tronçons paraboliques, que l'angle 2α entre les deux faisceaux est facilement obtenu entre les deux axes focaux, inclinés chacun de +α et -α par rapport au Nadir, pour le faisceau à polarisation horizontale $\bar{E}_h$ et l'autre à polarisation verticale $\bar{E}_v$ respectivement.

La coupe longitudinale de cette figure 7 est perpendiculaire aux génératrices rectilignes des réflecteurs cylindro-parabolique selon l'invention. Aussi, ces réflecteurs peuvent être générés par translation de cette coupe selon ces mêmes génératrices rectilignes, pour obtenir l'antenne bi-réflecteur cylindro-parabolique selon l'invention.

La construction décrite en exemple de réalisation selon les figures 4, 6, et 7 procure les performances et les avantages de l'invention, à savoir : les faisceaux peuvent être dépointés dans le sens transverse de l'angle φ désiré en commandant une loi de phase linéaire sur les réseaux linéaires 88,89. Dans un plan longitudinal, les faisceaux sont formés avec une faible divergence β par réflexion comme sur un miroir par les génératrices rectilignes de l'une ou l'autre coque (114,124), ce qui assure une qualité constante sur toute la largeur F de la fauchée, à condition que le réflecteur soit plus long que le réseau pour intercepter son rayonnement dépointé, comme montré sur les figures 5 et 6.

La figure 8 montre un détail d'un agrandissement d'une petite partie de la figure 7, dans une réalisation préférée de l'antenne selon l'invention.

Avantageusement, les deux coques de réflecteurs (114, 124) sont d'une construction et de dimensions similaires. Par exemple, chaque coque de réflecteur peut être réalisée de deux peaux (p) en matière diélectrique, du KEVLAR$^{(TM)}$ par exemple, qui sont collés sur une épaisseur ($C_1$, $C_2$) de nid d'abeille (n) qui peut être réalisé de la même matière.

Le découplage entre les deux faisceaux est assuré grâce à des polarisations linéaires orthogonales, par exemple horizontale et verticale. Sur la coque avant 114 sont gravés des fils parallèles (q), qui ne réfléchissent que la polarisation qui leur est parallèle (horizontale sur la figure 7). La polarisation orthogonale (verticale sur la figure) traverse cette grille, et est réfléchie par la coque arrière 124, conductrice sans fils (ou éventuellement à fils verticaux, bien que ceci ne soit pas indispensable). Ceci assure que le rayonnement issu de chacun des deux réseaux linéaires 89,88 est réfléchi par la seule coque pour laquelle ce réseau est situé le long de sa ligne focale.

L'espacement (e) et la largeur (d) des fils (q) sont optimisés pour améliorer les propriétés réfléchissantes à la fréquence de fonctionnement de l'antenne, selon les règles connues de l'homme de l'art. Les fils sont avantageusement gravés sur une peau diélectrique (p) très mince. Celle-ci provoque forcement des effets d'interface, dus à la différence de constante diélectrique entre le vide et la peau. Cette désadaptation peut être minimisée en gravant deux grilles de fils identiques (q,o) sur chacune des deux peaux (p) de la coque avant 114, espacées de $C_1$, avantageusement d'un quart de longueur d'onde à la fréquence de fonctionnement de l'antenne. Selon le principe classique en hyperfréquences, les réflexions provoquées par les deux discontinuités de constante diélectrique, de chaque côté de la coque 114 épaisse d'un quart d'onde, se superposent en opposition de phase et s'annulent.

Les deux coques de réflecteurs (114, 124) sont espacés d'une distance (P) qui varie entre 0 et 10 cm environ, car les deux paraboles génératrices sont inversées dans la structure 104. La structure est rigidifiée à l'aide des espaceurs/raidisseurs (R) d'une construction similaire aux deux coques de réflecteur (deux peaux diélectriques (p) collées sur un nid d'abeille n, ce qui donne une épaisseur totale T de l'ordre de un ou deux centimètres). De tels espaceurs/raidisseurs R peuvent être placés comme des poutres de renforcement entre les deux coques (114, 124) par exemple espacés d'une dimension Q de l'ordre de 20 cm.

Globalement le réflecteur décrit ci-dessus présente les mêmes dimensions extérieures que pour l'antenne monofaisceau équivalente, tout en permettant la réalisation de deux faisceaux espacés d'un angle $2\alpha$ élevé. Sa masse est inférieure à celle de deux réflecteurs monofaisceau selon l'art antérieur et montré sur les figures 2 et 3, et sa stabilité dimensionnelle permet d'effectuer sa mission avec une plus grande précision qu'avec les antennes de l'art antérieur.

## Revendications

1. Antenne bi-faisceaux ($B_F$,$B_B$) à balayage électronique pour radar stéréoscopique, ne comportant qu'une seule structure (104) de réflecteurs (114,124), caractérisée en ce que chaque faisceau ($B_F$,$B_B$) a sa polarisation propre, les deux polarisations étant orthogonales entre elles.

2. Antenne bi-faisceaux selon la revendication 1, caractérisée en ce que le balayage électronique est dans un plan transversal, en ce que les deux faisceaux ($B_F$,$B_B$) sont fins, par exemple d'une divergence angulaire b de l'ordre de 0,18° à 0,4°, et en ce que le domaine de balayage ($\pm\varphi_M$) dans un plan transversal, ainsi que l'écartement ($2\alpha$) dans un plan orthogonal dit longitudinal, sont de l'ordre de 50 à 200 fois la divergence angulaire ($\beta$) de chaque faisceau.

3. Antenne bi-faisceaux selon l'une quelconque des revendications 1 à 2, caractérisée en ce que ladite structure de réflecteurs (104) comprend deux coques de réflecteurs (114,124), dont un au moins est un réflecteur à grille (114), ces deux réflecteurs étant mutuellement disposés pour former un bi-réflecteur à grille (104).

4. Antenne bi-faisceaux selon la revendication 3, caractérisée en ce que les deux coques (114,124) sont reliées par des éléments structuraux (R) qui sont des espaceurs-raidisseurs.

5. Antenne bi-faisceaux selon l'une quelconque des revendications 3 à 4, caractérisée en ce que les deux réflecteurs 114,124 ont une forme cylindro-parabolique.

6. Antenne bi-faisceaux selon la revendication 5, caractérisée en ce que la section de chaque réflecteur cylindro-parabolique (114,124) dans un plan transverse à ses génératrices rectilignes est un tronçon de parabole, et en ce que ces deux tronçons de parabole sont disposés de façon inversée, le sommet $S_h$ de parabole du premier réflecteur (114) étant disposé à une première extrémité de la structure, et le sommet $S_v$ de parabole du deuxième réflecteur (124) étant à une deuxième extrémité de la structure (104) du bi-réflecteur à grille.

7. Antenne bi-faisceaux selon l'une quelconque des revendications précédentes, caractérisée en ce que un premier réflecteur à grille (114) réfléchit une première polarisation ($\bar{E}_h$) tout en laissant passer une deuxième polarisation ($\bar{E}_v$) orthogonale à la première polarisation ($\bar{E}_h$), sensiblement sans absorption ni réflexion.

8. Antenne bi-faisceaux selon l'une quelconque des revendications précédentes, caractérisée en ce que lesdits réflecteurs (114,124) sont illuminés par une pluralité de réseaux linéaires (88,89) de sources rayonnantes ($\sigma_{v1}$, $\sigma_{v2}$, ... $\sigma_{vn}$ ; $\sigma_{h1}$, $\sigma_{h2}$, ... $\sigma_{hn}$) dont les phases d'émission peuvent être commandées de manière à effectuer un balayage électronique dans un plan dit transversal.

9. Antenne bi-faisceaux selon la revendication 8, caractérisée en ce que lesdits réseaux de sources (88,89) sont disposés en "offset" par rapport aux réflecteurs respectifs (114,124), en dehors du champ rayonné réfléchi par ces réflecteurs (114,124).

10. Antenne bi-faisceaux selon l'une quelconque des revendications 3 à 9, caractérisée en ce que ledit réflecteur à grille (114) comprend un support diélectrique (n) de la forme voulue ayant deux faces, sur lesquelles sont collées deux peaux diélectriques (p), et en ce que sur l'une au moins de ces deux peaux (p) sont gravées des pistes conductrices parallèles (q) pour former ladite grille.

11. Antenne bi-faisceaux selon la revendication 10, caractérisée en ce que ledit support diélectrique (n) à une épaisseur d'un quart d'onde à la fréquence de fonctionnement de l'antenne, et en ce que des pistes conductrices parallèles (q, o) sont gravées sur lesdites deux peaux diélectriques (p).

12. Antenne bi-faisceaux selon l'une quelconque des revendications 3 à 9, caractérisée en ce que ladite antenne comprend des moyens de déphasage et d'amplification lui permettant de fonctionner dans un radar en impulsions, alternativement en émission et en réception.

13. Antenne bi-faisceaux selon l'une quelconque des revendications 3 à 9, caractérisée en ce que ladite antenne comprend des moyens de déphasage et d'amplification lui permettant de fonctionner dans un radiomètre, en réception uniquement.

**Patentansprüche**

1. Doppelstrahlantenne ($B_F$, $B_B$) mit elektronischer Strahlablenkung für stereoskopisches Radar, die nur ein einzige Struktur (104) von Reflektoren (114, 124) umfaßt,
   **dadurch gekennzeichnet, daß** jede Keule ($B_F$, $B_B$) seine eigene Polarisation aufweist, wobei die beiden Polarisationen aufeinander senkrecht stehen.

2. Doppelstrahlantenne nach Anspruch 1,
   **dadurch gekennzeichnet, daß** die elektronische Strahlablenkung in einer transversalen Ebene erfolgt, daß die beiden Keulen ($B_F$, $B_B$) dünn sind, z.B. entsprechend einer Winkeldivergenz b in der Größenordnung von 0,18° bis 0,4°, und daß der Bereich der Strahlablenkung ($\pm\varphi_M$) in einer transversalen Ebene, sowie der Abstand (2 $\alpha$) in einer hierzu orthogonalen, sogenannten longitudinalen Ebene in der Größenordnung des 50 bis 200 fachen der Winkeldivergenz ($\beta$) jeder Keule liegen.

3. Doppelstrahlantenne nach einem der Ansprüche 1 bis 2,
   **dadurch gekennzeichnet, daß** die genannte Reflektorenstruktur (104) aus zwei Reflektorschalen (114, 124) besteht, von denen wenigstens eine ein Gitterreflektor (114) ist, wobei diese beiden Reflektoren gegeneinander so angeordnet sind, daß sie einen Doppelgitterreflektor bilden.

4. Doppelstrahlantenne nach Anspruch 3,
   **dadurch gekennzeichnet, daß** die beiden Schalen (114, 124) durch Strukturelemente (R), welche Abstandhalter/ Versteifer sind, verbunden werden.

5. Doppelstrahlantenne nach einem der Ansprüche 3 bis 4,
   **dadurch gekennzeichnet, daß** die beiden Reflektoren 114, 124 eine zylindrisch-parabolische Form haben.

**6.** Doppelstrahlantenne nach Anspruch 5,
**dadurch gekennzeichnet, daß** der Schnitt jedes zylindrisch-parabolischen Reflektors (114, 124) in einer Ebene transversal zu seinen geradlinigen Mantellinien ein Parabelabschnitt ist, und daß diese beiden Parabelabschnitte in umgekehrter Weise angeordnet sind, wobei der Parabelscheitel $S_h$ des ersten Reflektors (114) an einem ersten Ende der Struktur angeordnet ist, und der Parabelscheitel $S_v$ des zweiten Reflektors (124) an einem zweiten Ende der Struktur (104) des Doppelgitterreflektors angeordnet ist.

**7.** Doppelstrahlantenne nach einem der vorhergehenden Ansprüche,
**dadurch gekennzeichnet, daß** ein erster Gitterreflektor (114) eine erste Polarisation ($E_h$) reflektiert, während er eine zweite, zur ersten orthogonalen, Polarisation ($E_v$) ohne Absorption oder Reflexion merklich hindurchtreten läßt.

**8.** Doppelstrahlantenne nach einem der vorhergehenden Ansprüche,
**dadurch gekennzeichnet, daß** die genannten Reflektoren (114, 124) von einer Mehrzahl von linearen Anordnungen (88, 89) von Strahlungsquellen ($\sigma_{v1}$, $\sigma_{v2}$,... $\sigma_{vn}$ ; $\sigma_{h1}$, $\sigma_{h2}$,... $\sigma_{hn}$) angestrahlt werden, deren Emissionphasen so gesteuert werden können, daß eine elektronische Strahlablenkung in einer transversal bezeichneten Ebene ausgeführt wird.

**9.** Doppelstrahlantenne nach Anspruch 8,
**dadurch gekennzeichnet, daß** die genannten Quellenanordnungen (88, 89) im "offset" bezüglich der jeweiligen Reflektoren (114, 124), außerhalb des durch diese Reflektoren (114, 124) reflektierten Strahlungsfeldes, angeordnet sind.

**10.** Doppelstrahlantenne nach einem der Ansprüche 3 bis 9,
**dadurch gekennzeichnet, daß** der genannte Gitterreflektor (114) einen dielektrischen Träger (n) der gewünschten Form umfaßt, welcher zwei Seiten aufweist, auf die zwei dielektrische Häute (p) geklebt sind, und daß auf wenigstens einer dieser beiden Häute (p) elektrisch leitfähige. parallele Streifen (q) zur Ausildung des genannten Gitters eingeprägt sind.

**11.** Doppelstrahlantenne nach Anspruch 10,
**dadurch gekennzeichnet, daß** der genannte dielektrische Träger (n) eine Dicke von einem Viertels der Wellenlänge der Arbeitsfrequenz der Antenne aufweist, und daß parallele, elektrisch leitfähige Streifen (q, o) auf die beiden genannten dielektrischen Häute (p) geprägt sind.

**12.** Doppelstrahlantenne nach einem der Ansprüche 3 bis 9,
**dadurch gekennzeichnet, daß** die genannte Antenne Mittel zur Phasenregelung und Verstärkung umfaßt, die es ihr ermöglichen, in einem Pulsradar alternativ in Emission und Aufnahme zu arbeiten.

**13.** Doppelstrahlantenne nach einem der Ansprüche 3 bis 9,
**dadurch gekennzeichnet, daß** die genannte Antenne Mittel zur Phasenregelung und Verstärkung umfaßt, die es ihr ermöglichen, in einem Radiometer alternativ in Emission und Aufnahme zu arbeiten.

## Claims

**1.** An electronically-scanned two-beam ($B_F$, $B_B$) antenna for stereoscopic radar, the antenna comprising a single reflector structure (104), and being characterized in that each beam ($B_F$, $B_B$) has its own polarization, the two polarizations being mutually orthogonal.

**2.** A two-beam antenna according to claim 1, characterized in that the electronic scanning takes place in a transverse plane, in that the two beams ($B_F$, $B_B$) are fine beams, e.g. of an angular divergence β of the order of 0.18° to 0.4°, and in that the scanning range ($\pm\varphi_M$) in a transverse plane, and the separation (2α) in a "longitudinal" orthogonal plane are of the order of 50 times to 200 times of the angular divergence (β) of each beam.

**3.** A two-beam antenna according to claim 1 or 2, characterized in that said reflector structure (104) comprises two reflector shells (114, 124), at least one of which (114) is a grid reflector, said two reflectors being mutually disposed so as to form a grid double reflector.

4. A two-beam antenna according to claim 3, characterized in that the two shells (114. 124) are connected together by structural elements (R) constituting spacer-stiffeners.

5. A two-beam antenna according to claim 3 or 4, characterized in that the two reflectors (114, 124) are cylindro-parabolic in shape.

6. A two-beam antenna according to claim 5, characterized in that the section of each cylindro-parabolic reflector (114, 124) in a plane transverse to its rectilinear generator lines constitutes a length of parabola, and in that said two lengths of parabola are disposed in an inverse manner such that the vertex $S_h$ of the parabola of the first reflector (114) is disposed at a first end of the structure while the vertex $S_v$ of the parabola of the second reflector (124) is disposed at the second end of the structure (104) of the grid double reflector.

7. A two-beam antenna according to any preceding claim, characterized in that a grid first reflector (114) reflects a first polarization ($\bar{E}_h$) while allowing a second polarization ($\bar{E}_v$) orthogonal to the first polarization ($\bar{E}_h$) to pass therethrough substantially without being absorbed or reflected.

8. A two-beam antenna according to any preceding claim, characterized in that reflectors (114, 124) are illuminated by a plurality of linear arrays (88, 89) of radiating sources ($\sigma_{v1}$, $\sigma_{v2}$, .... $\sigma_{vn}$; $\sigma_{h1}$, $\sigma_{h2}$, .... $\sigma_{hn}$) whose transmission phases can be controlled so as to perform electronic scanning in a "transverse" plane.

9. A two-beam antenna according to claim 8, characterized in that said source arrays (88, 89) are disposed so as to be offset relative to their respective reflectors (114, 124), lying outside the reflected field radiated by each of said reflectors (114, 124).

10. A two-beam antenna according to any one of claims 3 to 9, characterized in that said grid reflector (114) comprises a dielectric support (n) of desired shape and having two faces, with two dielectric skins (p) being stuck thereon, and in that at least one of the two skins (p) is etched with parallel conducting tracks (g) to form said grid.

11. A two-beam antenna according to claim 10, characterized in that said dielectric support (n) has a thickness of one-fourth of a wavelength at the operating frequency of the antenna, and in that parallel conductive tracks (g, o) are etched on said two dielectric skins (p).

12. A two-beam antenna according to any one of claims 3 to 9, characterized in that said antenna includes phase shifting and amplification means enabling it to operate as a pulse radar, alternatively in transmission and in reception.

13. A two-beam antenna according to any one of claims 3 to 9, characterized in that said antenna comprises phase shifting and amplification means enabling it to operate in a radiometer, in reception only.

# FIG.1

EP 0 640 844 B1

FIG.2

FIG.3

12

# FIG.4

# FIG.5

# FIG. 6

# FIG. 7

EP 0 640 844 B1

# FIG.8

17